# DEMANDE DE BREVET EUROPEEN

(11) **EP 1 310 398 A1**
(43) Date de publication de la demande: **14.05.2003**
(21) Numéro de dépôt: 02292588.7
(22) Date de dépôt: 18.10.2002
(51) Int. Cl.: B60K 6/04, B60K 17/02, F16D 13/58, F16D 21/08, H02K 7/108

(54) **Système de propulsion pour un véhicule automobile hybride**

(30) Priorité: 08.11.2001 FR 0114465
(71) Demandeur: Peugeot Citroen Automobiles SA, 92200 Neuilly sur Seine (FR)
(72) Inventeur: Hulin, René, 92500 Rueil Malmaison (FR)
(74) Mandataire: Thinat, Michel

(57) **Abrégé**

La présente invention concerne un système de propulsion pour un véhicule automobile.

Le système est caractérisé en ce que le volant d'inertie (26) du moteur thermique est monté à rotation par un palier (39) monté sur un support (38) solidaire de l'arbre vilebrequin (7) du moteur et deux embrayages (43 ; 32, 34, 35) sont commandés indépendamment l'un de l'autre de façon que la machine électrique (1) puisse fonctionner suivant plusieurs modes de fonctionnement, tels que notamment un mode de récupération de l'énergie cinétique du véhicule et un mode de traction électrique de celui-ci.

L'invention trouve application dans le domaine de l'automobile.

## Description

La présente invention concerne un système de propulsion pour un véhicule automobile.

On connaît un tel système comprenant un moteur à combustion interne, dont l'arbre moteur entraîne en rotation un volant d'inertie ; une boîte de vitesses ; des moyens d'embrayage entre l'arbre moteur et l'arbre d'entrée de la boîte de vitesses ; une machine électrique tournante réversible pouvant fonctionner en moteur de démarrage du moteur à combustion interne ou d'appoint de couple, ou en un générateur électrique, la machine électrique comprenant un stator et un rotor solidaire en rotation du volant d'inertie du moteur thermique par l'intermédiaire d'un couvercle d'embrayage.

Cependant, ce système connu de propulsion, où la machine électrique constitue un ensemble formant alternateur-démarreur, a pour inconvénient majeur de ne pas disposer de moyens d'embrayage permettant de configurer la machine électrique tournante non seulement en mode de démarrage électrique du moteur à combustion interne et en mode générateur électrique, mais également en mode de récupération de l'énergie cinétique du véhicule et en mode de traction électrique de ce véhicule.

La présente invention a pour but d'éliminer l'inconvénient ci-dessus en proposant un système de propulsion pour un véhicule automobile, comprenant un moteur à combustion interne, dont l'arbre moteur entraîne en rotation un volant d'inertie ; une boîte de vitesses ; une machine électrique tournante réversible pouvant fonctionner, suivant l'état de moyens d'embrayage, en moteur électrique ou en générateur électrique, la machine électrique comprenant un stator et un rotor solidaire en rotation du volant d'inertie par l'intermédiaire d'un couvercle d'embrayage, et qui est caractérisé en ce que le volant d'inertie est monté à rotation sur un palier solidaire de l'arbre moteur et les moyens d'embrayage comprennent un premier embrayage commandé interposé entre le volant d'inertie et un couvercle de logement du volant d'inertie solidaire de l'arbre moteur pour permettre un accouplement entre le rotor de la machine électrique et l'arbre moteur de façon que la machine électrique puisse fonctionner en mode de démarrage du moteur à combustion interne ou en mode de générateur électrique, et un second embrayage commandé indépendamment du premier embrayage, logé dans le couvercle d'embrayage et permettant un accouplement entre l'arbre moteur et l'arbre d'entrée lorsque le premier embrayage accouple le rotor à l'arbre moteur ou entre le rotor et l'arbre d'entrée lorsque le premier embrayage désaccouple le rotor de l'arbre moteur de façon que la machine électrique puisse fonctionner également en mode de récupération de l'énergie cinétique du véhicule ou en mode de traction électrique de ce véhicule.

Le premier embrayage est disposé entre la surface externe du volant d'inertie et une paroi annulaire concentrique du couvercle de logement de ce volant.

De préférence, le premier embrayage comprend des disques d'embrayage montés alternativement respectivement sur la surface externe du volant d'inertie et à la paroi annulaire du couvercle du logement et qui sont plaqués axialement les uns contre les autres en engagement par friction par un anneau élastique fixé à la surface externe du volant ou à la paroi annulaire du couvercle à l'opposé d'un anneau de retenue axiale des disques d'embrayage solidaire du volant d'inertie ou de la paroi annulaire du couvercle, et une douille à coulissement commandé disposée concentriquement entre la paroi annulaire du couvercle et la surface externe du volant permettant d'amener, à l'encontre de sa force de rappel, l'anneau élastique à une position de désengagement les uns des autres des disques d'embrayage.

La douille est commandée par au moins trois leviers pivotants dont l'un des bras de chaque levier est accouplé à la douille et l'autre bras est actionné par un organe de déplacement, tel qu'une butée d'embrayage à billes, piloté par une unité de commande électronique pouvant être mise en service par le conducteur du véhicule ou automatiquement.

Selon un autre mode de réalisation, le premier embrayage comprend des disques d'embrayage montés alternativement respectivement sur la surface externe du volant d'inertie et à la paroi annulaire du couvercle du logement et qui sont plaqués axialement les uns contre les autres en engagement par friction par un diaphragme solidaire en rotation du couvercle d'embrayage et exerçant élastiquement une poussée axiale sur les disques d'embrayage retenus à l'opposé du diaphragme par un anneau de retenue axiale solidaire du volant d'inertie, le diaphragme pouvant être commandé, à l'encontre de sa force élastique de poussée, de façon à l'amener à une position de désengagement les uns des autres des disques d'embrayage.

Avantageusement, le diaphragme comprend une partie centrale à bras radiaux raccordée à une partie externe approximativement en forme de cuvette, dont le bord supérieur crénelé est en appui élastique sur l'un des disques d'embrayage, en ce que le diaphragme repose sur un certain nombre d'axes cylindriques solidaires du couvercle d'embrayage parallèlement à l'axe de l'arbre vilebrequin en traversant respectivement plusieurs des espaces définis entre bras radiaux adjacents et en ce qu'un organe de commande du diaphragme constitué, par exemple, par une butée d'embrayage hydraulique cylindrique, agit par poussée sur les extrémités libres des bras radiaux de façon à désengager la partie externe du diaphragme du disque d'embrayage correspondant.

Le second embrayage comprend un disque relié, par un moyen d'accouplement flexible, en rotation à l'arbre d'entrée de la boîte de vitesses et pouvant être amené en engagement par friction sur une face dressée du volant d'inertie par une plaque annulaire de poussée et un diaphragme d'embrayage déplaçable par un organe de commande, tel qu'une butée d'embrayage hydraulique, piloté par un levier actionné par une pédale de débrayage du véhicule.

Le rotor de la machine électrique est monté coaxialement à l'arbre moteur et à l'arbre d'entrée de la boîte de vitesses, ces arbres étant montés en prolongement l'un de l'autre dans leurs carters respectifs moteur et de boîte de vitesses.

L'invention propose également une application du double embrayage du système de propulsion et selon laquelle la boîte de vitesses n'utilise plus de rapport de marche arrière du véhicule.

A cet effet, le premier embrayage est commandé par une unité de commande électronique permettant, à la demande du conducteur du véhicule ou automatiquement, de commander le premier embrayage en position débrayée de désaccouplement du rotor de l'arbre moteur pour configurer la machine électrique en mode de traction électrique du véhicule et, dans ce mode de configuration, de choisir le sens de rotation de la machine électrique pour déplacer le véhicule en marche avant ou en marche arrière suivant le sens de rotation choisi de la machine électrique.

La machine électrique déplace le véhicule en marche avant ou arrière lorsque le rapport de première vitesse de la boîte de vitesses est enclenché.

Avantageusement, l'unité de commande est reliée à au moins deux boutons de commande actionnables par le conducteur du véhicule, l'un permettant de commander le premier embrayage pour amener la machine en mode de traction électrique du véhicule et l'autre permettant de sélectionner le sens de rotation de la machine électrique pour le déplacement en marche avant ou arrière du véhicule.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 est une vue en coupe longitudinale représentant une machine électrique équipant un véhicule automobile logée dans un carter à double embrayage conforme à l'invention ;
- la figure 2 est une vue en coupe longitudinale d'une boîte de vitesses classique de véhicule automobile ;
- la figure 3 est une vue en coupe semblable à celle de la figure 2 et représentant une boîte de vitesses modifiée suivant l'invention, associée à l'embrayage double de la figure 1 ; et
- la figure 4 est une vue semblable à celle de la figure 1 et représentant un second mode de réalisation de l'invention.

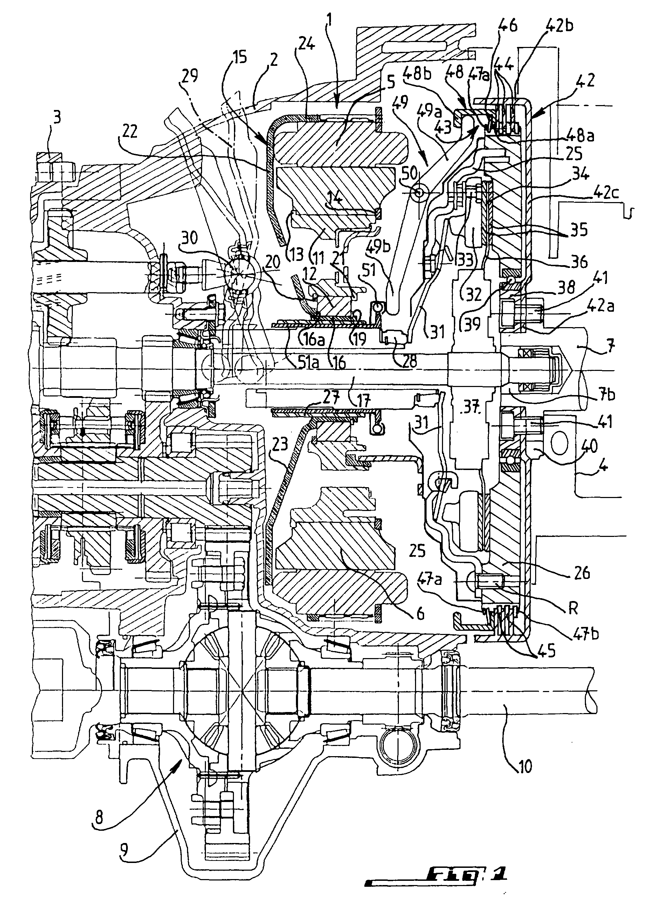

En se reportant à la figure 1, la référence 1 désigne une machine électrique ou alternateur-démarreur, logée dans un carter d'embrayage 2 fixé entre le carter 3 de boîte de vitesses et le carter 4 du moteur thermique d'un véhicule automobile.

La machine électrique 1 comprend essentiellement un stator annulaire 5 qui est fixe relativement au carter d'embrayage 2 et un rotor annulaire 6 logé dans le stator fixe 5 en définissant par rapport à ce dernier un entrefer.

Le rotor 6 peut être entraîné en rotation par l'arbre vilebrequin 7 du moteur thermique comme on le verra ultérieurement.

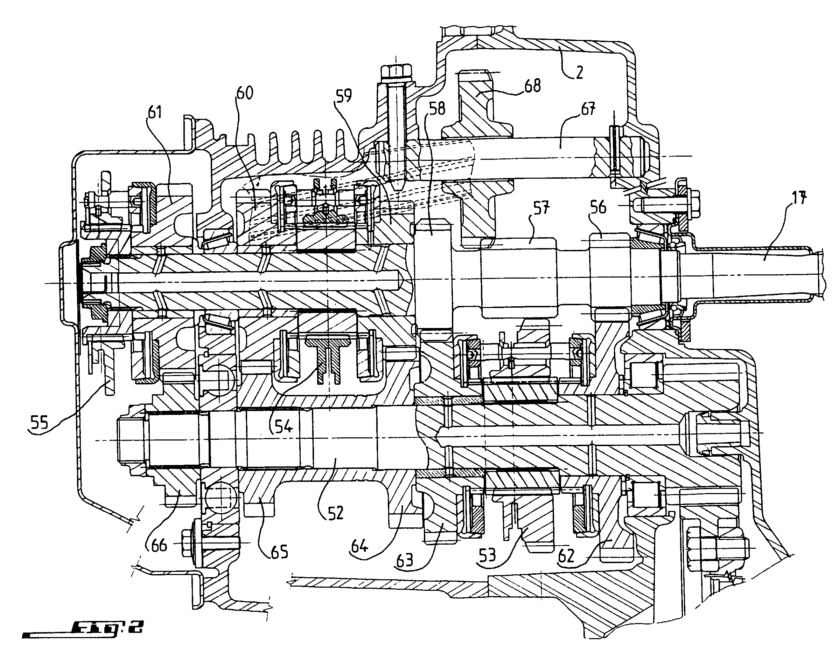

Les différents composants situés dans la boîte de vitesses 3 représentée partiellement seront décrits ultérieurement en référence notamment à la figure 2.

La référence 8 désigne le différentiel du véhicule logé dans un carter 9 et pouvant entraîner en rotation l'axe de roue 10.

Le rotor 6 est monté de façon solidaire sur un moyeu de support 11 qui est monté à rotation sur un palier 12 du type à roulement à billes. Ce rotor est maintenu axialement sur le moyeu 11 d'un côté par un épaulement 13 de ce moyeu et de l'autre côté par une bague annulaire 14.

L'ensemble constitué par le stator 5, le rotor 6, le moyeu 11 et le palier 12 est logé dans un carter indépendant 15 fixé par une partie de celui-ci au carter d'embrayage 2 par des vis de fixation (non représentées) de façon que le carter 15 soit logé dans le carter d'embrayage 2.

Le carter 15 comprend une partie centrale tubulaire 16 entourant coaxialement l'arbre d'entrée 17 de la boîte de vitesses et qui est monté à rotation dans un alésage borgne 7a réalisé en bout de l'arbre vilebrequin 7. Le palier 12 est monté sur la partie centrale tubulaire 16 en étant maintenu axialement sur celle-ci par un épaulement de butée 16a situé à une extrémité de la partie 16 et un circlips 19 au voisinage de l'extrémité de celle-ci. Le moyeu 11 est en outre maintenu axialement sur le palier 12 d'une part par un circlips 20 logé dans une gorge interne du moyeu et d'autre part par un épaulement 21 du moyeu 11 en appui sur le palier 12.

Le carter 15 comprend également une paroi latérale 22 s'étendant perpendiculairement à l'axe de l'arbre vilebrequin 7 et raccordée à la partie centrale tubulaire 16 par une paroi oblique 23. Le carter 15 comprend une paroi circulaire 24 prolongeant la partie supérieure de la paroi latérale 15 en s'étendant perpendiculairement à celle-ci et enserrant le stator 5 sur la surface périphérique circulaire externe de celui-ci.

L'ensemble constitué par le stator 5, le rotor 6, le moyeu 11 et le palier 12 est pré-assemblé, en usine, dans le carter 15 en l'introduisant du côté ouvert opposé à la paroi 22 et fixé dans celui-ci, puis le carter 15 est fixé au carter d'embrayage par les vis de fixation.

On obtient ainsi un entrefer rigoureusement constant de 0,5 mm, ce qui permet d'avoir un excellent rendement de la machine électrique 1.

Le moyeu 11 du rotor 6 est relié par l'intermédiaire de moyens d'accouplement à un couvercle d'embrayage 25, qui est solidaire en rotation du volant d'inertie 26 du moteur par des vis R. Ces moyens d'accouplement sont décrits de façon détaillée dans la demande de brevet français No. 99 16 641 déposée le 29 Décembre 1999 au nom de la demanderesse.

Le rotor 6 de la machine électrique 1 est monté coaxialement à l'arbre vilebrequin 7 et à l'arbre d'entrée 17 de la boîte de vitesses.

Un fourreau 27 est fixé dans la partie centrale 16 du carter 15 et sert de moyen de guidage en translation, à l'intérieur de celui-ci, d'une butée de débrayage 28 qui, sur les demi-vues supérieure et inférieure de la figure 1, est représentée en position de débrayage et d'embrayage. La butée de débrayage 28 est déplacée par une fourchette de commande 29 montée sur le carter d'embrayage 2 par une articulation à rotule 30 de façon à commander le déplacement en translation de la butée de débrayage 28 qui agit à son extrémité opposée à la fourchette 29 sur un diaphragme d'embrayage 31 qui agit sur une plaque annulaire ou plateau d'embrayage 32 logé dans le couvercle d'embrayage 25 en étant solidaire en rotation de celui-ci par des moyens de liaison 33 autorisant un déplacement axial du plateau 32 relativement au couvercle 25 et occupant normalement une position embrayée. Un disque d'embrayage 34 est interposé entre le plateau 32 et une face dressée, perpendiculaire à l'arbre vilebrequin 7, du volant d'inertie 26. Le disque 34 comporte sur chacune de ses faces opposées un matériau de friction 35. Le disque 34 est relié par un accouplement flexible 36 à un moyeu 37 solidaire en rotation de l'arbre d'entrée 17 de la boîte de vitesses.

En position embrayée de l'embrayage constitué par le plateau 32, le disque 34 et les matériaux de friction 35, la rotation de l'arbre vilebrequin 7 est transmise à l'arbre d'entrée 17 de la boîte de vitesses 3. En position débrayée de cet embrayage, lors du passage d'un rapport de vitesse, l'arbre vilebrequin 7 est désaccouplé de l'arbre d'entrée 17.

Selon l'invention, le volant d'inertie 26 est monté à rotation sur un moyeu de support 38 par l'intermédiaire d'un palier 39, tel qu'un roulement à billes ou autre. Le moyeu de support de palier 38 est solidaire en rotation d'une collerette 40 de l'arbre vilebrequin 7 par l'intermédiaire de vis de fixation 41.

Un couvercle 42 de logement du volant d'inertie 26 est solidaire en rotation de l'arbre vilebrequin 7 en ayant sa partie centrale annulaire 42a fixée entre la collerette 40 et le moyeu de support 38.

Le couvercle 42 comporte une paroi annulaire 42b s'étendant perpendiculairement de la paroi latérale 42c de ce couvercle et disposée concentriquement au volant d'inertie 26 à une certaine distance de la surface périphérique externe de celui-ci.

Un second embrayage 43 est disposé entre le volant d'inertie 26 et le couvercle 42 et permet, en position embrayée de celui-ci, de solidariser en rotation l'arbre vilebrequin 7 au rotor 6 de la machine électrique 1 par l'intermédiaire du couvercle d'embrayage 25.

Le second embrayage 43 comprend des disques d'embrayage 44 solidaires en rotation de la paroi annulaire 42b du couvercle 42 et des disques d'embrayage 45 disposés sur la surface externe du volant d'inertie 26 en étant solidaires en rotation de celui-ci. Les disques d'embrayage 44 et 45 sont plaqués les uns contre les autres en engagement par friction par un anneau élastique tronconique 46 monté sur le volant d'inertie 26 et maintenu axialement sur le volant par un anneau d'arrêt 47a monté dans une gorge de ce volant. Les disques d'embrayage 44, 45 sont maintenus axialement sur le volant 26 par un anneau de retenue 47b monté dans une gorge du volant à l'opposé de l'anneau 47a. Selon une variante de réalisation, l'anneau élastique 46 et les anneaux d'arrêt 47a et de retenue 47b peuvent être situés dans la paroi annulaire 42b du couvercle 42.

Une douille à coulissement commandé 48 est disposée entre la paroi annulaire 42b du couvercle 42 et le volant d'inertie 26 pour permettre le débrayage de l'embrayage 43. A cet effet, la douille 48 comporte une paroi transversale annulaire 48a pouvant coulisser axialement relativement au volant d'inertie 26, en étant solidaire en rotation de ce dernier, dans un sens allant à l'encontre de la force de rappel de l'anneau élastique 46 pour désengager les uns des autres les disques d'embrayage 44, 45. La douille 48 comporte en outre un rebord annulaire 48b situé à l'opposé de la paroi 48a et sur lequel viennent en appui des bras supérieurs 49a d'au moins trois leviers 49 montés chacun pivotant autour d'un axe de pivotement 50 et tournant avec le couvercle d'embrayage 25. Le pivotement de chaque levier 49 est commandé par une butée d'embrayage à billes 51 pilotée par un fluide hydraulique sous pression pour la déplacer en translation relativement à la partie centrale tubulaire 16 dans un sens exerçant une poussée sur l'extrémité libre du bras inférieur 49b du levier 49 pour faire pivoter le bras supérieur 49a dans un sens faisant coulisser la douille 48 à l'encontre de la force de rappel de l'anneau élastique 46. Comme représenté, la butée à billes 51 est solidaire de l'extrémité d'un manchon cylindrique 51a monté mobile en translation dans le fourreau 27 et relativement à la butée de débrayage 28. La commande hydraulique de la butée à billes 51 agit sur le manchon 51a. Les moyens d'acheminement du fluide hydraulique sous pression de déplacement de la butée 51 ne sont pas représentés mais on comprend qu'ils peuvent consister en une tubulure d'acheminement de ce fluide sous pression dans une chambre dans laquelle peut coulisser la butée d'embrayage 51 représentée schématiquement pour la simplicité. Bien entendu, en l'absence de pression dans cette chambre, la force de rappel de l'anneau élastique 46 est telle que celui-ci ramène le levier 49 à sa position à laquelle les disques d'embrayage 44, 45 sont en engagement par friction les uns avec les autres et la butée 51 est ramenée à sa position de repos. L'amenée du fluide sous pression pour déplacer la butée d'embrayage hydraulique 51 peut être commandée à partir d'une unité de commande électronique (non représentée) pouvant faire partie de l'électronique embarquée du véhicule automobile et permettant, à la demande du conducteur du véhicule, de commander l'embrayage 43 en position débrayée de désaccouplement du rotor 6 de la machine électrique 1 de l'arbre vilebrequin 7 du moteur thermique pour configurer la machine électrique 1 en mode de traction électrique du véhicule ou en mode de récupération de l'énergie cinétique de ce véhicule. Selon une variane de réalisation, la commande du manchon 51a peut être du type à fourchettes ou à tout autre moyen mécanique.

Comme cela ressort déjà en partie de la description qui précède, le dispositif à double embrayage permet d'accomplir un certain nombre de fonctions qui vont être maintenant précisées.

La première fonction concerne le démarrage du moteur thermique à partir de la machine électrique 1 utilisée comme moteur de démarrage. Pour cela, l'embrayage 43 est fermé, c'est-à-dire embrayé, et l'autre embrayage est ouvert, c'est-à-dire débrayé, ou le cas échéant fermé avec le levier de changement de vitesses au point mort. Dans ces conditions, lorsque la machine électrique 1 est alimentée en courant électrique à partir de la batterie du véhicule et du contacteur de démarrage, le rotor 6 de la machine 1 entraîne en rotation le couvercle 42 par l'intermédiaire du couvercle d'embrayage 25 et de l'embrayage 43 et, par conséquent, l'arbre vilebrequin 7 du moteur thermique. Ainsi, le rotor 6 de la machine électrique 1 est accouplé à l'arbre vilebrequin 7 du moteur thermique. Une fois que le moteur thermique a été démarré, l'alimentation électrique de la machine 1 est coupée et le conducteur peut fermer l'embrayage à disque 34 afin d'accoupler l'arbre d'entrée 17 de la boîte de vitesses à l'arbre vilebrequin 7 par l'intermédiaire du couvercle 42.

Pendant le fonctionnement du moteur thermique, le rotor 6 de la machine électrique 1 est entraîné en rotation par le couvercle 42, l'embrayage 43 et le couvercle 25 de sorte que la machine 1 fonctionne en un générateur de courant permettant d'alimentater l'appareillage électrique du véhicule et d'assurer la charge de la batterie du véhicule.

En mode de freinage du véhicule, l'embrayage à disque 34 est fermé et l'embrayage 43 est commandé par l'unité de commande électronique qui pilote la butée d'embrayage 51 pour qu'elle agisse sur le levier 49 de façon à ouvrir l'embrayage 43, de sorte que le rotor 6 de la machine 1 est désaccouplé de l'arbre vilebrequin 7. L'arbre d'entrée 17 de la boîte de vitesses entraîne le volant d'inertie 26 par l'intermédiaire de l'embrayage à disque 34, lequel volant entraîne en rotation le rotor 6 de la machine électrique 1 par l'intermédiaire du couvercle 25. Dans ces conditions, la machine électrique 1 agit comme un frein et produit du courant électrique pour récupérer l'énergie cinétique du véhicule.

Dans la situation qui précède où l'embrayage 43 est ouvert et l'autre embrayage est fermé, la machine électrique 1 peut être alimentée en courant électrique à partir de la batterie du véhicule pour entraîner le rotor 6 qui est accouplé en rotation à l'arbre d'entrée 17 de la boîte de vitesses de façon à déplacer le véhicule par la machine électrique 1 fonctionnant en moteur électrique de traction du véhicule.

Le dispositif à double embrayage qui vient d'être décrit est d'une structure très simple et extrêmement compacte contrairement aux dispositifs connus à double embrayage et peut être intégré dans une architecture de propulsion à boîte de vitesses existante.

La figure 2 représente une architecture connue d'une boîte de vitesses à cinq rapports de marche avant et un rapport de marche arrière.

Cette boîte de vitesses comprend essentiellement l'arbre primaire 17, qui est l'arbre d'entrée mentionné précédemment, monté à rotation dans le carter 2, un arbre récepteur ou secondaire 52, des manchons de crabotage 53, 54, 55, des pignons 56 à 61 portés par l'arbre primaire 17 et des pignons 62 à 66 portés par l'arbre récepteur 52.

Les pignons 56 à 58 sont solidaires de l'arbre primaire 17 tandis que les pignons 59 à 61 sont montés fous sur cet arbre. En outre, les pignons 62 et 63 sont montés fous sur l'arbre récepteur 52, les pignons 64 et 65, qui sont taillés sur une pièce commune, sont solidaires en rotation de l'arbre récepteur 52 et le pignon 66 est solidaire en rotation de l'arbre récepteur 52. Le carter 2 supporte un axe 67 sur lequel est monté le pignon de marche arrière 68.

Les manchons de crabotage 53 à 55 sont montés fixes à rotation mais mobiles en translation sur leurs arbres respectifs 17, 52 et sont chacun commandés par une fourchette correspondante (non représentée) dans une direction déterminée à partir d'une position neutre représentée en figure 2.

Ainsi, le déplacement du manchon de crabotage 53 vers le pignon 62 permet de solidariser ce dernier à l'arbre récepteur 52 et de sélectionner ainsi le rapport de première vitesse de marche avant, tandis que le déplacement dans le sens opposé du manchon 53 permet de solidariser en rotation le pignon 63 à l'arbre récepteur 52 et de sélectionner le rapport de deuxième vitesse de marche avant, les pignons 56 et 58 solidaires de l'arbre primaire 17 étant en engrènement respectivement avec les pignons 62 et 63. Le déplacement du manchon de crabotage 54 vers le pignon 59 permet de solidariser ce dernier avec l'arbre primaire 17 et d'entraîner en rotation l'arbre récepteur 52 par l'intermédiaire du pignon 64 en engrènement avec le pignon 59, de façon à sélectionner le rapport de troisième vitesse de marche avant. Le déplacement dans le sens opposé du manchon de crabotage 54 permet de solidariser le pignon 60 à l'arbre primaire 17 et d'entraîner en rotation l'arbre récepteur 52 par l'intermédiaire du pignon 65 en engrènement avec le pignon 60, de façon à sélectionner le rapport de quatrième vitesse de marche avant. Le déplacement du manchon de crabotage 55 vers le pignon 61 permet de solidariser ce dernier à l'arbre primaire 17 et d'entraîner en rotation l'arbre récepteur 52 par l'intermédiaire du pignon 66 en engrènement avec le pignon 61, de façon à sélectionner le rapport de cinquième vitesse de marche avant. Le déplacement du manchon de crabotage de marche arrière (non représenté) permet de sélectionner le rapport de marche arrière.

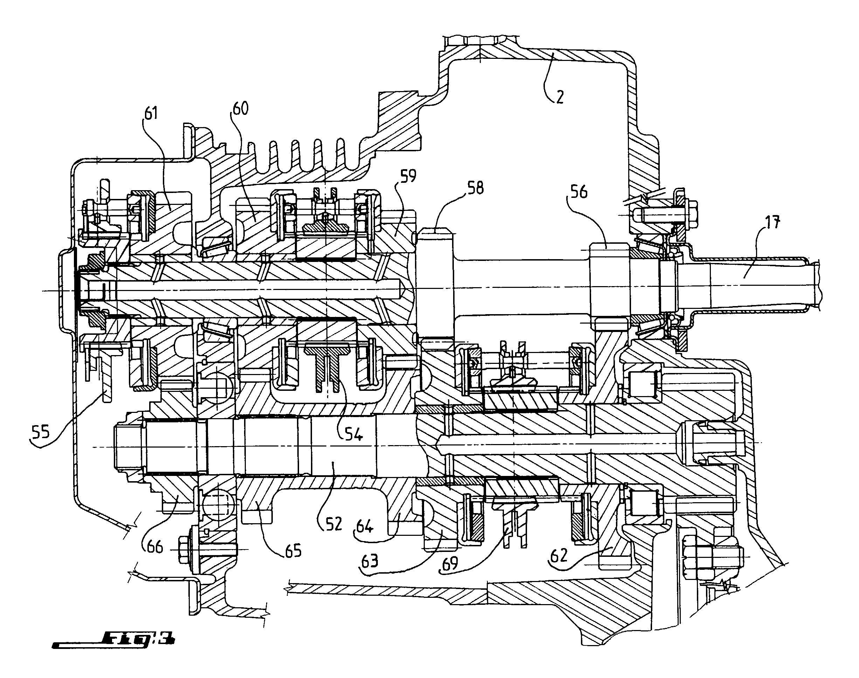

L'utilisation du dispositif à deux embrayages décrit en référence à la figure 1 permet de changer la configuration de la boîte de vitesses classique de la figure 2 de façon qu'elle ne comporte plus de marche arrière comme cela ressort de 1a boîte de vitesses de la figure 3 où les mêmes pièces que celles de la figure 2 portent les mêmes références.

Ainsi, le pignon de marche arrière 68, le pignon 57 taillé sur l'arbre moteur 17 et la couronne dentée du manchon de crabotage 53 assurant la fonction de marche arrière, sont supprimés et le manchon de crabotage 69 utilisé pour le passage du rapport de première vitesse ou du rapport de deuxième vitesse est identique au manchon de crabotage 54.

Pour assurer le passage en marche arrière du véhicule automobile, le conducteur ordonne à l'unité de commande électrique de piloter la butée d'embrayage 51 pour qu'elle ouvre l'embrayage 43 avec l'autre embrayage en position fermée de façon que le rotor 6 de la machine électrique 1 soit accouplé à l'arbre d'entrée 17 de la boîte de vitesse par l'intermédiaire du capot d'embrayage 25, du volant d'inertie 26, de l'embrayage à disque 34 et du moyeu 37. Ensuite, le conducteur ordonne à l'unité de commande électronique d'alimenter la machine électrique 1, qui fonctionne en moteur électrique, dans un sens de rotation opposé à celui permettant d'entraîner en marche avant le véhicule de façon à entraîner en rotation l'arbre d'entrée 17 et le pignon 56 qui entraîne en rotation l'arbre récepteur 52, par l'intermédiaire du pignon 62 en prise avec le manchon de crabotage 69 (le levier de changement de vitesses étant ainsi enclenché suivant le premier rapport de vitesse), de la sorte chaque roue motrice du véhicule est entraînée dans le sens de la marche arrière du véhicule.

Pour permettre au conducteur de choisir entre le rapport de première vitesse de marche avant ou la marche arrière du véhicule, deux boutons d'actionnement, par exemple du type à pression, peuvent être reliés à l'unité de commande électronique, l'un de ces boutons permettant de commander l'embrayage 43 pour amener la machine électrique en mode de traction électrique du véhicule dans le sens de la marche avant, après avoir enclenché le levier de changement de vitesse sur le premier rapport de vitesse, et l'autre bouton, qui peut être également du type bouton-poussoir, permettant de sélectionner le sens de rotation du rotor 6 de la machine électrique 1 pour le déplacement en marche avant ou en marche arrière du véhicule en enfonçant à chaque fois ce dernier bouton. Un témoin lumineux peut indiquer au conducteur le mode sélectionné de marche avant ou arrière du véhicule. Bien entendu, d'autres configurations de boutons en liaison avec l'unité de commande électronique peuvent être prévues pour sélectionner le sens de déplacement, en marche avant ou en marche arrière, du véhicule.

L'association du dispositif à double embrayage de l'invention avec le boîte de vitesses de la figure 3 permet non seulement d'éliminer la marche arrière d'une boîte de vitesses classique, mais également de libérer de l'espace pour introduire, si nécessaire, un sixième rapport de vitesses sans ainsi augmenter l'encombrement du carter de la boîte de vitesses.

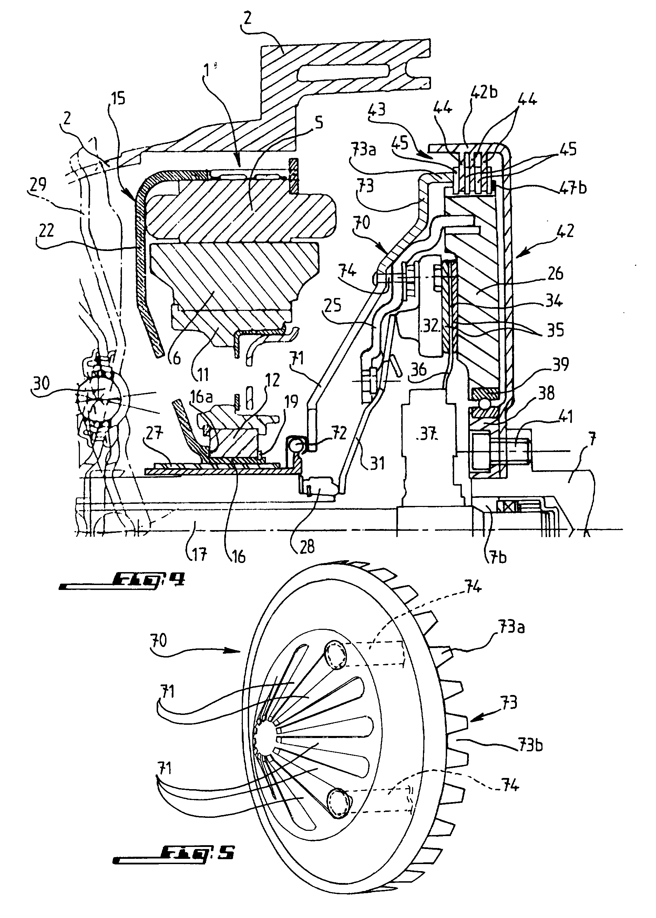

La figure 4 représente un autre mode de réalisation du moyen de commande de déplacement par coulissement de la douille 48 d'ouverture ou de fermeture de l'embrayage 43.

Selon ce mode de réalisation, les leviers 49 sont remplacés par un diaphragme 70 solidaire en rotation du couvercle d'embrayage 25 comme on le verra ultérieurement tout en pouvant être mobile relativement au couvercle d'embrayage 25 pour ouvrir l'embrayage 43.

A cet effet, le diaphragme 70 comporte une partie centrale disposée concentriquement à l'arbre d'entrée 17 de la boîte de vitesses et constituée d'une pluralité de bras radiaux 71 sur les extrémités libres desquels peut agir par poussée une butée d'embrayage à billes 72 identique à la butée d'embrayage à billes 51 de la figure 1. Les bras radiaux 71 peuvent être inclinés relativement à un plan transversal à l'arbre d'entrée 17 de façon à définir une partie centrale tronconique dont le plus petit diamètre est défini par les extrémités libres de ces bras sur lesquels est en appui la butée 72.

Le diaphragme 70 comprend également une partie externe 73 ayant la forme générale d'une cuvette élastique dont le bord annulaire supérieur 73a est découpé en fentes 73b, lui donnant une configuration crénelée, pour ne pas gêner le fonctionnement du diaphragme et élastiquement en appui directement sur le premier des disques d'embrayage 45 solidaires en rotation du volant d'inertie 26, de façon à maintenir les disques 44, 45 de l'embrayage 43 en engagement par friction les uns avec les autres. En variante de réalisation, la partie 73 du diaphragme est en forme de couronne annulaire transversale à l'arbre 17 et en appui sur une partie annulaire en vis à vis solidaire du premier des disques d'embrayage 45.

Les bras radiaux 71 sont raccordés à la partie supérieure 73 du diaphragme 70 en définissant entre deux bras adjacents une partie de liaison arquée dont plusieurs d'entre elles sont traversées par un axe cylindrique 74 solidaire du couvercle d'embrayage 25 parallèlement à l'arbre d'entrée 17 et s'étendant sur une même circonférence pour entraîner en rotation le diaphragme 70. Chaque axe cylindrique 74 peut être constitué par un rivet sur lequel est en appui la partie de liaison arquée de deux bras adjacents en position de repos du diaphragme 70.

Lorsque la butée d'embrayage 72 est pilotée hydrauliquement, elle exerce un effort axial de poussée simultanément sur les extrémités des bras radiaux 71 du diaphragme 70 qui provoquent relativement au couvercle d'embrayage 25 une déformation élastique de la partie supérieure 73 du diaphragme 70 dans un sens écartant légèrement le bord supérieur 73a de la partie 73 du disque d'embrayage 45 pour ouvrir ainsi l'embrayage 43.

## Revendications

1. Système de propulsion pour un véhicule automobile, comprenant un moteur à combustion interne, dont l'arbre moteur (7) entraîne en rotation un volant d'inertie (26); une boîte de vitesses; une machine électrique tournante réversible (1) pouvant fonctionner, suivant l'état de moyens d'embrayage, en moteur électrique ou en générateur électrique, la machine électrique (1) comprenant un stator (5) et un rotor (6) solidaire en rotation du volant d'inertie (26) par l'intermédiaire d'un couvercle d'embrayage (25), **caractérisé en ce que** le volant d'inertie (26) est monté à rotation sur un palier (39) solidaire de l'arbre moteur (7) et les moyens d'embrayage comprennent un premier embrayage commandé (43) interposé entre le volant d'inertie (26) et un couvercle (42) de logement du volant d'inertie (26) solidaire de l'arbre moteur (7) pour permettre un accouplement entre le rotor (6) de la machine électrique (1) et l'arbre moteur (7) de façon que la machine électrique (1) puisse fonctionner en mode de démarrage du moteur à combustion interne ou en mode de générateur électrique, et un second embrayage (32,34,35) commandé indépendamment du premier embrayage (43), logé dans le couvercle d'embrayage (25) et permettant un accouplement entre l'arbre moteur (7) et l'arbre d'entrée (17) lorsque le premier embrayage (43) accouple le rotor (6) à l'arbre moteur (7) ou entre le rotor (6) et l'arbre d'entrée (17) lorsque le premier embrayage (43) désaccouple le rotor (6) de l'arbre moteur (7) de façon que la machine électrique (1) puisse fonctionner également en mode de récupération de l'énergie cinétique du véhicule ou en mode de traction électrique du véhicule.

2. Système selon la revendication 1, **caractérisé en ce que** le premier embrayage est disposé entre la surface externe du volant d'inertie et une paroi annulaire concentrique du couvercle de logement de ce volant.

3. Système selon la revendication 2, **caractérisé en ce que** le premier embrayage (43) comprend des disques d'embrayage (44,45) montés alternativement respectivement sur la surface externe du volant d'inertie (26) et à la paroi annulaire (42b) du couvercle de logement (42) et qui sont plaqués axialement les uns contre les autres en engagement par friction par un anneau élastique (46) fixé à la surface externe du volant (26) ou à la paroi annulaire du couvercle (42) à l'opposé d'un anneau de retenue axiale des disques d'embrayage (44,45) solidaire du volant (26) ou de la paroi annulaire du couvercle (42), et une douille à coulissement commandé (48) disposée concentriquement entre la paroi annulaire (42b) du couvercle (42) et la surface externe du volant (26) et permettant d'amener, à l'encontre de sa force de rappel, l'anneau élastique (46) à une position de désengagement les uns des autres des disques d'embrayage (44,45).

4. Système selon la revendication 3, **caractérisé en ce que** la douille (48) est commandée par au moins trois leviers pivotants (49) dont l'un (49a) des bras de chaque levier (49) est accouplé à la douille (48) et l'autre bras (49b) est actionné par un organe de déplacement (51), tel qu'une butée d'embrayage hydraulique, piloté par une unité de commande électronique pouvant être mise en service par le conducteur du véhicule ou automatiquement.

5. Système selon la revendication 2, **caractérisé en ce que** le premier embrayage (43) comprend des disques d'embrayage (44, 45) montés alternativement respectivement sur la surface externe du volant d'inertie (26) et à la paroi annulaire (42b) du couvercle du logement (42) et qui sont plaqués axialement les uns contre les autres en engagement par friction par un diaphragme (70) solidaire en rotation du couvercle d'embrayage (25) et exerçant élastiquement une poussée axiale sur les disques d'embrayage (44, 45) retenus à l'opposé du diaphragme (70) par un anneau de retenue axiale solidaire du volant d'inertie (26), le diaphragme (70) pouvant être commandé, à l'encontre de sa force élastique de poussée, de façon à l'amener à une position de désengagement les uns des autres des disques d'embrayage (44, 45).

6. Système selon la revendication 5, **caractérisé en ce que** le diaphragme (70) comprend une partie centrale à bras radiaux (71) raccordée à une partie externe approximativement en forme de cuvette dont le bord supérieur crénelé est en appui élastique sur l'un des disques d'embrayage (44, 45), **en ce que** le diaphragme (70) repose sur un certain nombre d'axes cylindriques (74) solidaires du couvercle d'embrayage (25) parallèlement à l'axe de l'arbre vilebrequin (7) en traversant respectivement plusieurs des espaces définis entre bras radiaux adjacents (74) et **en ce qu'**un organe de commande du diaphragme (70) constitué, par exemple, par une butée d'embrayage hydraulique cylindrique, agit par poussée sur les extrémités libres des bras radiaux (71) de façon à désengager la partie externe (73) du diaphragme (70) du disque d'embrayage correspondant.

7. Système selon l'une des revendications précédentes, **caractérisé en ce que** le second embrayage comprend un disque (34) relié, par un moyen d'accouplement flexible (36,37), en rotation à l'arbre d'entrée (17) de la boîte de vitesses et pouvant être amené en engagement par friction sur une face dressée du volant d'inertie (26) par une plaque annulaire de poussée (32) et un diaphragme d'embrayage (31) déplaçable par un organe de commande (28), tel qu'une butée d'embrayage hydraulique, piloté par un levier (49) actionné par une pédale de débrayage du véhicule.

8. Système selon l'une des revendications précédentes, **caractérisé en ce que** le rotor (6) de la machine électrique (1) est monté coaxialement à l'arbre d'entrée (17) de la boîte de vitesses, ces arbres étant montés en prolongement l'un de l'autre dans leurs carters respectifs moteur (4) et de boîte de vitesses (2).

9. Système selon la revendication 1, **caractérisé en ce que** le premier embrayage (43) est commandé par une unité de commande électronique permettant, à la demande du conducteur du véhicule ou automatiquement, de commander le premier embrayage (43) en position débrayée de désaccouplement du rotor (6) de l'arbre moteur (7) pour configurer la machine électrique (1) en mode de traction électrique du véhicule et, dans ce mode de configuration, de choisir le sens de rotation de la machine électrique (1) pour déplacer le véhicule en marche avant ou en marche arrière suivant le sens de rotation choisi de la machine électrique (1).

10. Système selon la revendication 9, **caractérisé en ce que** la machine électrique (1) déplace le véhicule en marche avant ou arrière lorsque le rapport de première vitesse de la boîte de vitesses est enclenché.

11. Système selon la revendication 9 ou 10, **caractérisé en ce que** l'unité de commande est reliée à au moins deux boutons de commande actionnables par le conducteur du véhicule, l'un permettant de commander le premier embrayage (43) pour amener la machine (1) en mode de traction électrique du véhicule et l'autre permettant de sélectionner le sens de rotation de la machine électrique (1) pour le déplacement en marche avant ou arrière du véhicule.
